# EUROPEAN PATENT APPLICATION

(11) **EP 4 430 996 A1**
(43) Date of publication of application: **18.09.2024**
(21) Application number: 24163313.0
(22) Date of filing: 13.03.2024
(51) Int. Cl.: A47J 37/06

(54) **FRYER PLATE, FRYER BASKET ASSEMBLY, AND AIR FRYER**

(30) Priority: 14.03.2023 CN 202320488252 U
(71) Applicant: Beijing Xiaomi Mobile Software Co., Ltd., Beijing 100085 (CN); Ningbo Careline Electric Appliance Co., Ltd., Ningbo, Zhejiang 315000 (CN)
(72) Inventor: DAI, Yuexuan, Beijing 100085 (CN); ZHANG, Ming, Beijing 100085 (CN); MAO, Yiyi, Beijing 100085 (CN); ZHANG, Yichi, Ningbo 315000 (CN); BAI, Rongjie, Ningbo 315000 (CN); HE, Sheng, Ningbo 315000 (CN); CAO, Youbing, Ningbo 315000 (CN)
(74) Representative: Hughes, Andrea Michelle

(57) **Abstract**

A fryer plate (1) accommodated inside a fryer basket (2) includes: a holding portion (11) for holding food and including a first air hole (1111); and a support portion (12) coupled to the holding portion. The support portion is coupled to the fryer basket, the holding portion is spaced apart from an inner bottom wall surface of the fryer basket, and a first air passage (15) is formed between the support portion and the inner bottom wall surface of the fryer basket and is in connection with the first air hole.

## Description

### FIELD

The present invention relates to the field of air fryers, and more particularly to a fryer plate, a fryer basket assembly, and an air fryer.

### BACKGROUND

An air fryer is a popular cooking appliance, which is equipped with a fryer basket assembly for forming a cooking chamber. A heating tube and a heat circulation fan are arranged above the fryer basket assembly and are configured to form a heat circulation airflow in the cooking chamber, to cook food. In the related art, the fryer basket assembly includes a fryer basket and a fryer plate arranged inside the fryer basket, and the fryer plate is configured to hold the food. In a process of cooking the food, in order to prevent the food on top from being burnt and to ensure uniform heating of the food, it is necessary to take out the fryer basket many times and manually flip the food, which is a cumbersome operation and results in poor user experience.

### SUMMARY

The present invention aims to solve at least one of the problems existing in the related art to at least some extent.

Accordingly, aspects of the present invention propose a fryer plate that has advantages of ensuring uniform heating of food without manually flipping the food, simple food heating operation, and great user experience.

Embodiments of the present invention further propose a fryer basket assembly.

Embodiments of the present invention further propose an air fryer.

According to one aspect of the present invention, a fryer plate accommodated inside a fryer basket includes: a holding portion for holding food and including a first air hole; and a support portion coupled to the holding portion. The support portion is coupled to the fryer basket, the holding portion is spaced apart from an inner bottom wall surface of the fryer basket, and a first air passage is formed between the support portion and the inner bottom wall surface of the fryer basket and is in connection with the first air hole.

For the fryer plate according to the embodiments of the present invention, when the fryer plate is placed inside the fryer basket, the support portion is coupled to the fryer basket in such a way that the holding portion of the fryer plate is spaced apart from the inner bottom wall surface of the fryer basket and the first air passage in connection with the first air hole is formed between the holding portion and the inner bottom wall surface of the fryer basket. At this time, when food is placed on the holding portion to be cooked, hot air entering the fryer basket from top to bottom heats a top surface of the food, and the hot air also enters the first air passage to heat a bottom surface of the food. Consequently, there is no need to manually flip the food to ensure uniform heating of the food; the food heating operation is simple, and the user experience is excellent.

In some embodiments, the fryer plate further includes a lateral wall portion on a periphery of the holding portion. The lateral wall portion and the holding portion define an accommodation space with an upward opening. At least a part of the lateral wall portion is spaced apart from an inner side wall surface of the fryer basket, and a second air passage is formed between the part of the lateral wall portion and the inner side wall surface of the fryer basket. An upper end of the second air passage is in connection with an upper space of the lateral wall portion, and a lower end of the second air passage is in connection with the first air passage.

In some embodiments, a plurality of support portions are discretely arranged on a bottom surface of the holding portion.

In some embodiments, the plurality of support portions extend along a spiral direction around a center line of the holding portion.

In some embodiments, a plurality of support portions are arranged on an outer peripheral surface of the lateral wall portion and spaced apart from each other along a peripheral direction of the lateral wall portion. The support portions are coupled to the inner side wall surface of the fryer basket.

In some embodiments, the fryer plate further includes a silicone sleeve in one-to-one correspondence with the plurality of support portions, and each silicone sleeve is fitted over the corresponding support portion.

In some embodiments, each support portion includes a necking section and a limiting section coupled to each other; an end of the necking section away from the limiting section is coupled to the lateral wall portion; and the largest area of an outer contour of a cross section of the necking section is smaller than the smallest area of an outer contour of a cross section of the limiting section.

In some embodiments, the fryer plate further includes a flange portion arranged on an outer peripheral surface of the lateral wall portion and extending along the peripheral surface of the lateral wall portion, and the flange portion includes a plurality of second air holes.

In some embodiments, the lateral wall portion includes a plurality of third air holes spaced apart from each other along a peripheral direction of the lateral wall portion.

In some embodiments, a plurality of first air holes are spaced apart from each other on the holding portion.

In some embodiments, the holding portion includes a bottom plate and a guide rib on the bottom plate; the guide rib protrudes from a top surface of the bottom plate; and the plurality of first air holes are on the bottom plate and are spaced apart from the guide rib.

In some embodiments, the guide rib includes a fourth air hole.

In some embodiments, a plurality of guide ribs are spaced apart from each other along a peripheral direction of the holding portion; each of the plurality of guide ribs extends along a spiral direction around a center line of the bottom plate; and there is at least one first air hole between adjacent guide ribs.

In some embodiments, the guide rib includes: a plurality of first guide ribs, each first guide rib extending along a spiral direction around a center line of the bottom plate, and the plurality of first guide ribs being spaced apart from each other along a peripheral direction of the holding portion; and a plurality of second guide ribs, each second guide rib extending along the peripheral direction of the holding portion, and at least one second guide rib being arranged between any two adjacent first guide ribs.

In some embodiments, a plurality of second guide ribs and a plurality of first air holes are arranged between any two adjacent first guide ribs, and the plurality of second guide ribs and the plurality of first air holes between any two adjacent first guide ribs are alternately arranged along a radial direction of the holding portion.

In some embodiments, a plurality of first air holes are present and extend along a spiral direction around a center line of the holding portion.

According to another aspect of the present invention, a fryer basket assembly includes a fryer basket and the fryer plate according to any one of the above embodiments, the fryer plate being accommodated inside the fryer basket.

The fryer basket assembly according to the embodiments of the present invention has the same technical advantages as the fryer plate according to the above embodiments, which will not be repeated herein.

In some embodiments, the fryer plate further includes a lateral wall portion on a periphery of the holding portion; the lateral wall portion and the holding portion define an accommodation space with an upward opening; and a plurality of support portions are arranged on an outer peripheral surface of the lateral wall portion and spaced apart from each other along a peripheral direction of the lateral wall portion. The fryer basket includes a limiting protrusion on an inner peripheral surface of the fryer basket; the number of the limiting protrusions is equal to the number of the support portions; a plurality of limiting protrusions are spaced apart from each other along a peripheral direction of the fryer basket; and the support portion abuts against a top surface of the limiting protrusion.

In some embodiments, the fryer basket includes a plurality of fifth air holes on a side wall of the fryer basket.

According to another aspect of the present invention, an air fryer includes the fryer plate according to any one of the above embodiments or the fryer basket assembly according to any one of the above embodiments.

The air fryer according to the embodiments of the present invention has the same technical advantages as the fryer plate and the fryer basket assembly according to the above embodiments, which will not be repeated herein.

### BRIEF DESCRIPTION OF DRAWINGS

FIG. 1 is a sectional view of an air fryer according to an embodiment of the present invention.
FIG. 2 is a schematic view of a fryer basket assembly according to an embodiment of the present invention.
FIG. 3 is an axonometric view of a fryer plate according to an embodiment of the present invention.
FIG. 4 is another sectional view of an air fryer according to an embodiment of the present invention.
FIG. 5 is an axonometric view of a fryer plate of the air fryer in FIG. 4.
FIG. 6 is another axonometric view of a fryer plate of the air fryer in FIG. 4.
FIG. 7 is another axonometric view of a fryer plate according to an embodiment of the present invention.
FIG. 8 is a top view of a fryer plate according to an embodiment of the present invention.
FIG. 9 is another axonometric view of a fryer plate according to an embodiment of the present invention.
FIG. 10 is another schematic view of a fryer basket of a fryer basket assembly according to an embodiment of the present invention.

### References signs:

100 air fryer; 1 fryer plate; 11 holding portion; 111 bottom plate; 1111 first air hole; 112 guide rib, 1121 fourth air hole, 1122 first guide rib; 1123 second guide rib; 12 support portion; 121 necking section; 122 limiting section; 13 lateral wall portion; 131 third air hole; 14 flange portion; 141 second air hole; 15 first air passage; 16 second air passage; 17 accommodation space; 18 silicone sleeve; 2 fryer basket; 21 fifth air hole; 3 motor; 4 heat circulation fan; 5 heating tube.

### DETAILED DESCRIPTION

Embodiments of the present invention are described in detail below, and examples of the embodiments are shown in the accompanying drawings. The embodiments described below with reference to the accompanying drawing are illustrative and are intended to explain the present invention rather than limit the present invention.

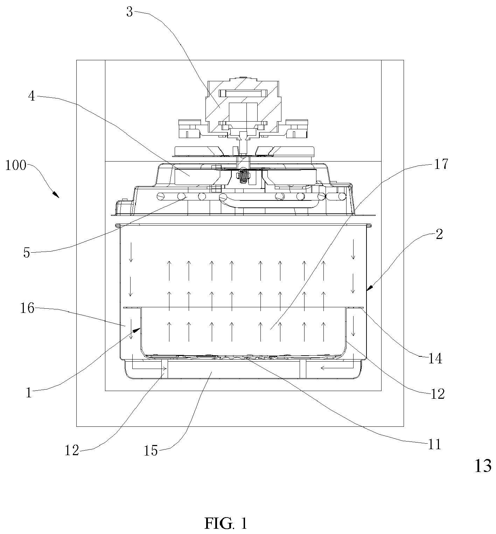

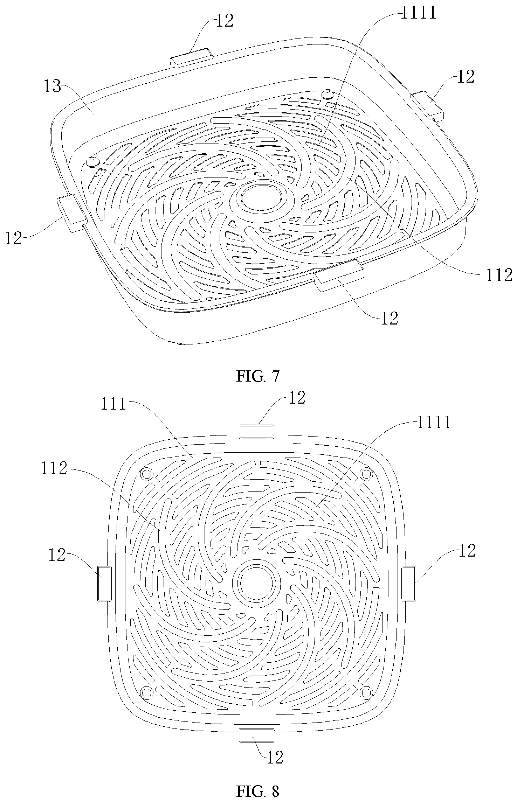

A fryer plate 1 according to embodiments of the present invention is described with reference to FIGS. 1-8.

The fryer plate 1 according to the embodiments of the present invention is configured to be accommodated inside a fryer basket 2 and includes a holding portion 11 and a support portion 12. The holding portion 11 is configured to hold food and include a first air hole 1111. The support portion 12 is coupled to the holding portion 11, and the support portion 12 is configured to be coupled to the fryer basket 2. The holding portion 11 is spaced apart from an inner bottom wall surface of the fryer basket 2, and a first air passage 15 is formed between the support portion 11 and the inner bottom wall surface of the fryer basket 2. The first air passage 15 is in connection with the first air hole 1111.

For the fryer plate 1 according to the embodiments of the present invention, when the fryer plate 1 is placed inside the fryer basket 2, the support portion 12 is coupled to the fryer basket 2 in such a way that the holding portion 11 of the fryer plate 1 is spaced apart from the inner bottom wall surface of the fryer basket 2 and the first air passage 15 in connection with the first air hole 1111 is formed between the holding portion 11 and the inner bottom wall surface of the fryer basket 2. At this time, when food is placed on the holding portion 11 to be cooked, hot air entering the fryer basket 2 from top to bottom heats a top surface of the food, and the hot air also enters the first air passage 15 to heat a bottom surface of the food. Consequently, there is no need to manually flip the food to ensure uniform heating of the food; the food heating operation is simple, and the user experience is excellent.

It should be noted that the hot air entering the fryer basket 2 may enter the first air passage 15 through the first air hole 1111 and then be discharged upwards out of the first air passage 15 through the first air hole 1111, to achieve baking of the bottom surface of the food. Alternatively, the hot air entering the fryer basket 2 may enter the first air passage 15 through a gap between the fryer plate 1 and an inner side wall surface of the fryer basket 2 and then be discharged upwards out of the first air passage 15 through the first air hole 1111, to achieve baking of the bottom surface of the food.

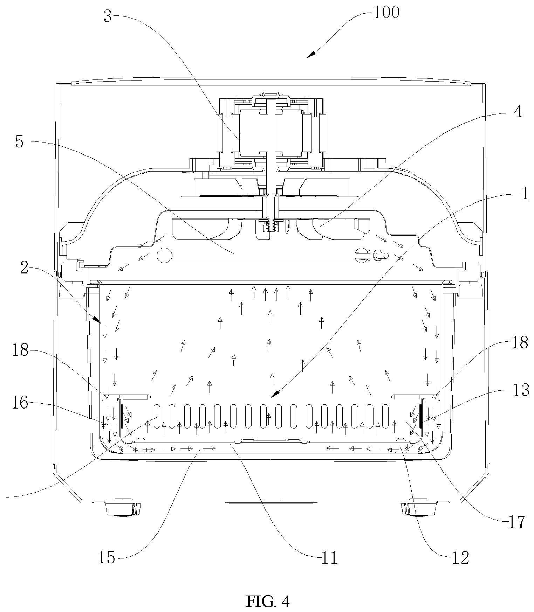

In some embodiments, as shown in FIGS. 1 and 4, the fryer plate 1 further includes a lateral wall portion 13 on a periphery of the holding portion 11, and the lateral wall portion 13 and the holding portion 11 define an accommodation space 17 with an upward opening. At least a part of the lateral wall portion 13 is spaced apart from the inner side wall surface of the fryer basket 2. A second air passage 16 is formed between the part of the lateral wall portion 13 and the inner side wall surface of the fryer basket 2. An upper end of the second air passage 16 is in connection with an upper space of the lateral wall portion 13, and a lower end of the second air passage 16 is in connection with the first air passage 15.

That is, the hot air entering the fryer basket 2 enters the first air passage 15 through the second air passage 16, and then uses the first air hole 1111 to bake the bottom surface of the food. In such a case, a flow path of the hot air in the fryer basket 2 is stable, baking the bottom surface of the food uniformly and upgrading the user experience.

Specifically, as shown in FIGS. 1 and 4, an air fryer 100 drives, by a motor 3, a heat circulation fan 4 to rotate. The heat circulation fan 4 blows air downwards, the air is heated through a heating tube 5, and the hot air finally enters the fryer basket 2. At this time, the hot air entering the fryer basket 2 flows downwards in a spiral manner and is adjacent to a side wall of the fryer basket 2. Consequently, wind loss occurring when the hot air enters the second air passage 16 is lower, and the hot air entering the second air passage 16 and the first air passage 15 is stronger, resulting in a higher efficiency of baking the bottom surface of the food, which is basically consistent with an efficiency of baking the top surface of the food with the hot air, to ensure that the food is heated more uniformly and the user experience is better.

In some embodiments, as shown in FIG. 1 and 4, a plurality of support portions 12 are discretely arranged on a bottom surface of the holding portion 11.

That is, each support portion 12 has a support foot structure, and the plurality of support portions 12 simultaneously abut against the inner bottom wall surface of the fryer basket 2, to complete horizontal and stable placement of the holding portion 11 inside the fryer basket 2, realizing stable support for the food.

Specifically, there are preferably four support portions 12, roughly arranged at four corners of the holding portion 11. On the premise of achieving stable support, a cross-sectional area of each support portion 12 is preferably as small as possible, to avoid wind loss due to obstruction by the support portions 12 when the hot air enters the first air passage 15.

In some embodiments, the support portion 12 extends along a spiral direction around a center line of the holding portion 11.

In such a case, an extension direction of the support portion 12 matches a rotation direction of the hot air when the hot air enters the fryer basket 2. When entering the first air passage 15 from the second air passage 16, the hot air will enter the first air passage 15 in a stable flow direction under the guidance of the support portion 12 and will not suffer too much wind loss when passing through the support portion 12, so that a heating effect on the bottom surface of the food is better.

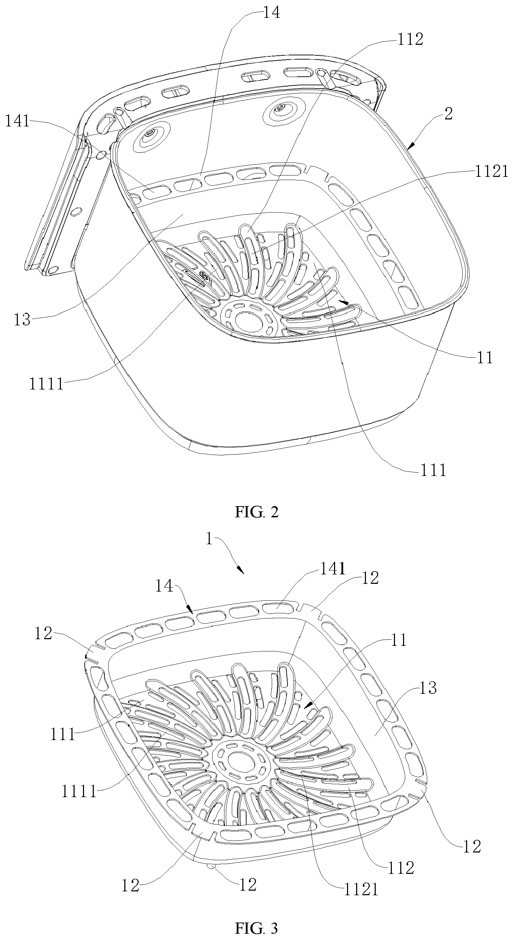

In some embodiments, as shown in FIGS. 2-8, a plurality of support portions 12 are arranged on an outer peripheral surface of the lateral wall portion 13, and the plurality of support portions 12 are spaced apart from each other along a peripheral direction of the lateral wall portion 13. The support portions 12 are configured to be coupled to the inner side wall surface of the fryer basket 2.

That is, the support portions 12 may be coupled to the inner side wall surface of the fryer basket 2, so that the holding portion 11 is spaced apart from the inner bottom wall surface of the fryer basket 2. Meanwhile, the plurality of support portions 12 are spaced apart from each other along the peripheral direction of the lateral wall portion 13, so that the second air passage 16 realize connection with the upper space of the lateral wall portion 13 and the first air passage 15 by a gap between adjacent support portions 12, while the second air passage 16 is formed between the lateral wall portion 13 and the inner side wall surface of the fryer basket 2.

Specifically, the support portion 12 extends horizontally, and may be butted, lapped or crimped with the inner side wall surface of the fryer basket 2 to achieve stable placement of the fryer plate 1 inside the fryer basket 2. Meanwhile, the support portion 12 may be arranged on an upper edge of the lateral wall portion 13, or may also be arranged at any position of the lateral wall portion 13 in its height direction. In addition, there are preferably four support portions 12 separately arranged at four corners of the lateral wall portion 13.

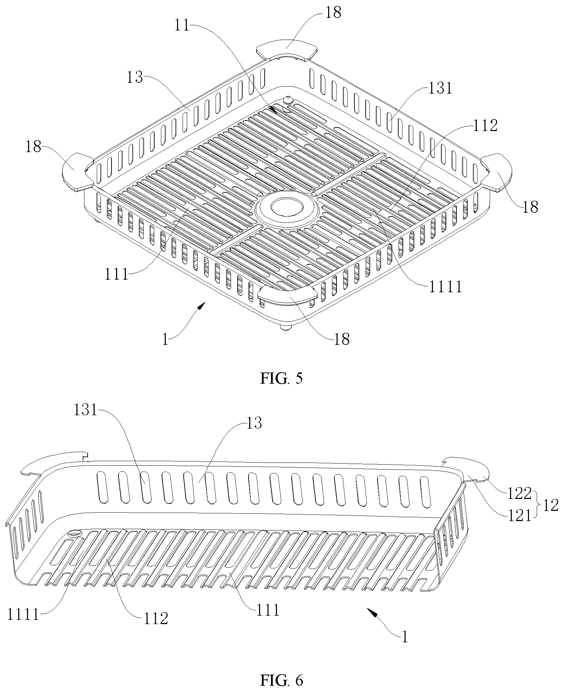

In some embodiments, as shown in FIG. 5, the fryer plate 1 further includes silicone sleeves 18 in one-to-one correspondence with the support portions 12, and each silicone sleeve 18 is fitted over the corresponding support portion 12.

The support portion 12 of the fryer plate 1 is coupled to the inner side wall surface of the fryer basket 2 through the silicone sleeve 18, effectively increasing a friction force against movement of the fryer plate 1 relative to the fryer basket 2, improving a fixation effect of the fryer plate 1 inside the fryer basket 2, and providing more stable and reliable support for the food. Meanwhile, the arrangement of silicone sleeves 18 also reduces noise generated when the fryer plate 1 is placed inside the fryer basket 2 and upgrades the user experience.

In some embodiments, as shown in FIG. 6, the support portion 12 includes a necking section 121 and a limiting section 122 coupled to each other. An end of the necking section 121 away from the limiting section 122 is coupled to the lateral wall portion 13, and the largest area of an outer contour of a cross section of the necking section 121 is smaller than the smallest area of an outer contour of a cross section of the limiting section 122.

Consequently, a barb that extends towards the lateral wall portion 13 is formed at a joint of the necking section 121 and the limiting section 122. After the silicone sleeve 18 is fitted over the support portion 12, the barb effectively prevents the silicone sleeve 18 from detaching from the support portion 12.

Specifically, as shown in FIG. 6, both the necking section 121 and the limiting section 122 are roughly fan-shaped, and a size of the necking section 121 along its peripheral direction is smaller than a size of the limiting section 122 along its peripheral direction.

In some embodiments, as shown in FIGS. 1-3, the fryer plate 1 further includes a flange portion 14 arranged on an outer peripheral surface of the lateral wall portion 13 and extending along the peripheral surface of the lateral wall portion 13. The flange portion 14 includes a plurality of second air holes 141.

An outer peripheral dimension of the flange portion 14 matches an inner contour dimension of a cross section of the fryer basket 2. As a result, when the fryer plate 1 is placed inside the fryer basket 2, an outer edge of the flange portion 14 roughly abuts against the inner side wall surface of the fryer basket 2, so that the fryer plate 1 and the fryer basket 2 are relatively fixed in a horizontal direction, and the dimension stability of the second air passage 16 is ensured. Meanwhile, the arrangement of the second air holes 141 ensures that the second air passage 16 is in connection with the upper space of the lateral wall portion 13, and the hot air entering the fryer basket 2 enters the second air passage 16 through the second air holes 141.

Specifically, the flange portion 14 extends along the peripheral direction of the lateral wall portion 13 and is connected end to end. The plurality of second air holes 141 are waist-shaped holes and are arranged at equal intervals along the peripheral direction of the lateral wall portion 13. The second air passage 16 is a ring-shaped air passage surrounding the lateral wall portion 13.

In some embodiments, as shown in FIGS. 4-6, the lateral wall portion 13 includes a plurality of third air holes 131 spaced apart from each other along the peripheral direction of the lateral wall portion 13.

That is, after the hot air of the fryer basket 2 enters the second air passage 16, in addition to part of the hot air going further downward into the first air passage 15, there is also part of the hot air blowing from the third air holes 131 to the accommodation space 17, to bake a side surface of the food. As a result, the hot air bakes the food more uniformly, and the food in the accommodation space 17 does not need to be flipped or change its angle, which leads to better user experience.

As shown in FIG. 5, each third air hole 131 is a strip-shaped hole extending vertically, and the plurality of third air holes 131 are arranged at equal intervals along the peripheral direction of the lateral wall portion 13.

In some embodiments, as shown in FIG. 3 and FIGS. 5-8, a plurality of first air holes 1111 are spaced apart from each other on the holding portion 11.

Thus, when the food is placed on the holding portion 11, there will always be one or more first air holes 1111 that will not be blocked by the food, ensuring that the hot air in the first air passage 15 flows into the accommodation space 17 through the one or more first air holes 1111, and ensuring a stable flow of the hot air in the fryer basket 2. In such a case, a cross-sectional area of each first air hole 1111 may be designed to be smaller, effectively preventing the food from falling into the first air passage 15 through the first air hole 1111.

Specifically, the first air holes 1111 are roughly arranged evenly on the holding portion 11, ensuring that the hot air in the first air passage 15 uniformly bakes the bottom surface of the food through the plurality of first air holes 1111.

In some embodiments, as shown in FIG. 3 and FIGS. 5-8, the holding portion 11 includes a bottom plate 111 and a guide rib 112 on the bottom plate 111. The guide rib 112 protrudes from a top surface of the bottom plate 111. The first air holes 1111 are on the bottom plate 111 and are spaced apart from the guide rib 112.

In such a case, the guide rib 112 realizes support for the food, and the food is generally not in contact with the bottom plate 111, ensuring that the first air holes 1111 on the bottom plate 111 will not be blocked by the food and hence ensuring that the hot air in the first air passage 15 flows stably and reliably from the first air holes 1111 into the accommodation space 17, to realize the reliable baking of the bottom surface of the food.

In some embodiments, as shown in FIG. 3, the guide rib 112 includes a fourth air hole 1121.

At this time, the hot air in the first air passage 15 can also bake part of the food that is in contact with the guide rib 112 through the fourth air hole 1121, further ensuring that the bottom surface of the food is heated uniformly.

Specifically, as shown in FIG. 3, the fourth air hole 1121 extends along a length direction of the guide rib 112. Each guide rib 112 includes two or three fourth air holes 1121 arranged at intervals along the length direction of the guide rib 112.

In some embodiments, as shown in FIG. 3, a plurality of guide ribs 112 are spaced apart from each other along a peripheral direction of the holding portion 11. Each of the plurality of guide ribs 112 extends along a spiral direction around a center line of the bottom plate 111. There is at least one first air hole 1111 between adjacent guide ribs 112. Each of the plurality of first air holes 1111 extends along a spiral direction around the center line of the holding portion 11.

An extension direction of the first air hole 1111 and an extension direction of the guide rib 112 match a flow channel direction of the hot air in the first air passage 15. The hot air in the first air passage 15 suffers less wind loss when entering the accommodation space 17 through the first air holes 1111 and the fourth air holes 1121, and hence the baking efficiency of the hot air for the bottom surface of the food is higher.

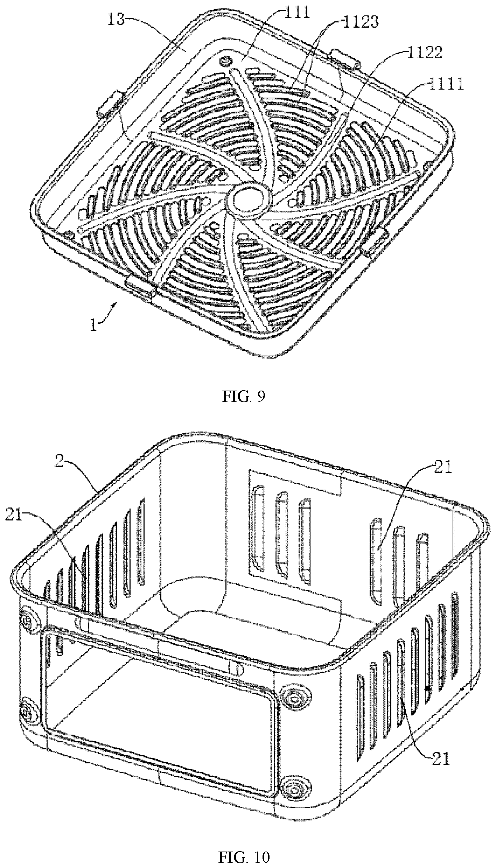

Alternatively, as shown in FIG. 9, the guide rib 112 further includes a first guide rib 1122 and a second guide rib 1123. There are a plurality of first guide ribs 1122, each extending along a spiral direction around the center line of the bottom plate 111. The plurality of first guide ribs 1122 are spaced apart from each other along the peripheral direction of the holding portion 11. There are a plurality of second guide ribs 1123, each extending along the peripheral direction of the holding portion 11. At least one second guide rib 1123 is arranged between any two adjacent first guide ribs 1122.

As a result, the plurality of first guide ribs 1122 and the plurality of second guide ribs 1123 together support the food, and under the joint guidance of the first guide ribs 1122 and the second guide ribs 1123, the hot air in the first air passage 15 is subject to less wind loss when entering the accommodation space 17 through the first air holes 1111 and the fourth air holes 1121, generates lower noise, and heats the bottom surface of the food more uniformly.

Specifically, the plurality of first guide ribs 1122 are arranged at equal intervals along the peripheral direction of the holding portion 11. A first end of each first guide rib 1122 is adjacent to a center of the bottom plate 111, and a second end of each first guide rib 1122 is adjacent to an edge of the bottom plate 111.

In some embodiments, as shown in FIG. 9, a plurality of second guide ribs 1123 and a plurality of first air holes 1111 are arranged between any two adjacent first guide ribs 1122, and the plurality of second guide ribs 1123 and the plurality of first air holes 1111 between any two adjacent first guide ribs 1122 are alternately arranged along a radial direction of the holding portion 11.

As a result, the plurality of second guide ribs 1123 and the plurality of first air holes 1111 are more uniformly distributed on the bottom plate 111; the plurality of second guide ribs 1123 in cooperation with the first guide ribs 1122 provide better support for the food; and the hot air is dispersed more evenly when entering the accommodation space 17 through the first air holes 1111, to better realize the uniform heating of the food.

A fryer basket assembly according to embodiments of the present invention includes the fryer basket 2 and the fryer plate 1 according to any one of the above embodiments, and the fryer plate 1 is accommodated inside the fryer basket 2.

The fryer basket assembly according to the embodiments of the present invention has the same technical advantages as the fryer plate 1 according to the above embodiments, which will not be repeated herein.

In some embodiments, the fryer plate 1 further includes a lateral wall portion 13 on a periphery of the holding portion 11, and the lateral wall portion 13 and the holding portion 11 define an accommodation space 17 with an upward opening. A plurality of support portions 12 are arranged on an outer peripheral surface of the lateral wall portion 13, and the plurality of support portions 12 are spaced apart from each other along a peripheral direction of the lateral wall portion 13. The fryer basket 2 includes a limiting protrusion on an inner peripheral surface of the fryer basket 2. The number of limiting protrusions is equal to the number of support portions 12. A plurality of limiting protrusions are spaced apart from each other along a peripheral direction of the fryer basket 2. Each support portion 12 abuts against a top surface of the corresponding limiting protrusion.

That is, the fryer plate 1 is stably placed inside the fryer basket 2 by lapping the support portion 12 over the corresponding limiting protrusion, and it is ensured that the holding portion 11 is spaced apart from the inner bottom wall surface of the fryer basket 2, without need to arrange a support foot structure on the bottom surface of the holding portion 11. Meanwhile, the plurality of limiting protrusions arranged at intervals along the peripheral direction of the fryer basket 2 effectively prevent the second air passage 16 from being completely blocked by the limiting protrusions, to ensure that the hot air flows stably and reliably in the second air passage 16.

In some embodiments, as shown in FIG. 10, the fryer basket 2 includes a plurality of fifth air holes 21 on a side wall of the fryer basket. In such a case, after entering the fryer basket 2, the hot air will flow out of the fryer basket 2 through the fifth air holes 21 to form a reflux in an outer circle of the fryer basket 2, making the heating of the fryer basket 2 uniform, enhancing the temperature uniformity of the space inside the fryer basket 2, and achieving better heating of the food.

Specifically, a side wall of the fryer basket 2 facing outwards is provided with a handle and has no fifth air hole 21, while each of three other side walls of the fryer basket 2 includes a plurality of fifth air holes 21 arranged at intervals along the peripheral direction of the fryer basket 2. Each fifth air hole 21 extends along a height direction of the fryer basket 2.

An air fryer 100 according to embodiments of the present invention includes the fryer plate 1 according to any one of the above embodiments or the fryer basket assembly according to any one of the above embodiments.

The air fryer according to the embodiments of the present invention has the same technical advantages as the fryer plate 1 and the fryer basket assembly according to the above embodiments, which will not be repeated herein.

In the specification, it is to be understood that terms such as "central," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," "circumferential" and the like should be construed to refer to the orientation as then described or as shown in the drawings under discussion. These relative terms are for convenience and simplicity of description and do not indicate or imply that the devices or elements referred to must have a specific orientation or be constructed and operated in a specific orientation. These terms cannot be construed as limitation on the present invention.

In addition, terms such as "first" and "second" are used herein for purposes of description and are not intended to indicate or imply relative importance or the number of indicated technical features. Consequently, features defined as "first" and "second" can explicitly or implicitly include one or more of this feature. In the description of the present invention, the term "a plurality of' means at least two, such as two or three, unless specified otherwise.

In the present invention, unless specified or limited otherwise, terms "mounted," "connected," "coupled," "fixed" and the like are used broadly, and may be, for example, fixed connections, detachable connections, or integral connections; may also be mechanical or electrical connections; may also communicate with each other; may also be direct connections or indirect connections via intervening structures; may also be inner connection or mutual interaction of two elements, which can be understood by those skilled in the art according to specific situations.

In the present invention, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of' a second feature may include an embodiment in which the first feature is right or obliquely "on," "above," or "on top of' the second feature, or just means that the first feature is at a height higher than that of the second feature; while a first feature "below," "under," or "on bottom of" a second feature may include an embodiment in which the first feature is right or obliquely "below," "under," or "on bottom of" the second feature, or just means that the first feature is at a height lower than that of the second feature.

Reference throughout this specification to "an embodiment," "some embodiments," "an example," "a specific example," or "some examples," means that a particular feature, structure, material, or characteristic described in connection with the embodiment or example is included in at least one embodiment or example of the present invention. Thus, the appearances of these phrases in various places throughout this specification are not necessarily referring to the same embodiment or example of the present invention. Furthermore, the particular features, structures, materials, or characteristics may be combined in any suitable manner in one or more embodiments or examples. Moreover, those skilled in the art may combine and unite different embodiments or examples described in this specification, as well as features of different embodiments or examples, without conflicting with each other.

Although embodiments of the present invention have been shown and described, it would be appreciated by those skilled in the art that the above embodiments are exemplary and cannot be construed as limitation on the present invention, and changes, modifications, alternatives and variations can be made in the embodiments without departing from the scope of the present invention as defined by the claims.

## Claims

1. A fryer plate (1) accommodated inside a fryer basket (2), the fryer plate (1) comprising:
a holding portion (11) for holding food and comprising a first air hole (1111); and
a support portion (12) coupled to the holding portion (11),
wherein the support portion (12) is coupled to the fryer basket (2), the holding portion (11) is spaced apart from an inner bottom wall surface of the fryer basket (2), and a first air passage (15) is formed between the support portion (12) and the inner bottom wall surface of the fryer basket (2) and is in connection with the first air hole (1111).

2. The fryer plate (1) according to claim 1, further comprising a lateral wall portion (13) on a periphery of the holding portion (11), the lateral wall portion (13) and the holding portion (11) defining an accommodation space with an upward opening;
wherein at least a part of the lateral wall portion (13) is spaced apart from an inner side wall surface of the fryer basket (2), and a second air passage (16) is formed between the part of the lateral wall portion (13) and the inner side wall surface of the fryer basket (2); and
an upper end of the second air passage (16) is in connection with an upper space of the lateral wall portion (13), and a lower end of the second air passage (16) is in connection with the first air passage (15).

3. The fryer plate (1) according to claim 1 or 2, wherein a plurality of support portions (12) are discretely arranged on a bottom surface of the holding portion (11),
and optionally, the plurality of support portions (12) extend along a spiral direction around a center line of the holding portion (11).

4. The fryer plate (1) according to claim 2 or 3, wherein a plurality of support portions (12) are arranged on an outer peripheral surface of the lateral wall portion (13) and spaced apart from each other along a peripheral direction of the lateral wall portion (13); and
the support portions (12) are coupled to the inner side wall surface of the fryer basket (2),
and optionally, the fryer plate (1) further comprises a plurality of silicone sleeves (18) in one-to-one correspondence with the plurality of support portions (12), wherein each silicone sleeve (18) is fitted over the corresponding support portion (12).

5. The fryer plate (1) according to any one of claims 2-4, wherein each support portion (12) comprises a necking section (121) and a limiting section (122) coupled to each other; an end of the necking section (121) away from the limiting section (122) is coupled to the lateral wall portion (13); and the largest area of an outer contour of a cross section of the necking section (121) is smaller than the smallest area of an outer contour of a cross section of the limiting section (122).

6. The fryer plate (1) according to any one of claims 2-5, further comprising a flange portion (14), wherein the flange portion (14) is arranged on an outer peripheral surface of the lateral wall portion (13) and extends along the peripheral surface of the lateral wall portion (13), and the flange portion (14) comprises a plurality of second air holes (141),
and optionally, the lateral wall portion (13) comprises a plurality of third air holes (131) spaced apart from each other along a peripheral direction of the lateral wall portion (13).

7. The fryer plate (1) according to any one of claims 1-6, wherein a plurality of first air holes (1111) are present and spaced apart from each other on the holding portion (11).

8. The fryer plate (1) according to claim 7, wherein the holding portion (11) comprises a bottom plate (111) and a guide rib (112) on the bottom plate; the guide rib (112) protrudes from a top surface of the bottom plate; and the plurality of first air holes (1111) are on the bottom plate and are spaced apart from the guide rib (112),
and optionally, the guide rib (112) comprises a fourth air hole (1121).

9. The fryer plate (1) according to claim 8, wherein a plurality of guide ribs (112) are present and spaced apart from each other along a peripheral direction of the holding portion (11); each of the plurality of guide ribs (112) extends along a spiral direction around a center line of the bottom plate; and at least one first air hole (1111) is present between adjacent guide ribs (112).

10. The fryer plate (1) according to claim 8 or 9, wherein the guide rib (112) comprises:
a plurality of first guide ribs (1122), each first guide rib (1122) extending along a spiral direction around a center line of the bottom plate, and the plurality of first guide ribs (1122) being spaced apart from each other along a peripheral direction of the holding portion (11); and
a plurality of second guide ribs (1123), each second guide rib (1123) extending along the peripheral direction of the holding portion (11), and at least one second guide rib (1123) being arranged between any two adjacent first guide ribs (1122).

11. The fryer plate (1) according to claim 10, wherein a plurality of second guide ribs (1123) and a plurality of first air holes (1111) are arranged between any two adjacent first guide ribs (1122), and the plurality of second guide ribs (1123) and the plurality of first air holes (1111) between any two adjacent first guide ribs (1122) are alternately arranged along a radial direction of the holding portion (11),
and optionally, the plurality of first air holes (1111) extend along a spiral direction around a center line of the holding portion (11).

12. A fryer basket assembly, comprising a fryer basket (2) and the fryer plate (1) according to any one of claims 1 to 11, the fryer plate (1) being accommodated inside the fryer basket (2).

13. The fryer basket assembly according to claim 12, wherein:
the fryer plate (1) further comprises a lateral wall portion (13) on a periphery of the holding portion (11); the lateral wall portion (13) and the holding portion (11) define an accommodation space (17) with an upward opening; and a plurality of support portions (12) are arranged on an outer peripheral surface of the lateral wall portion (13) and spaced apart from each other along a peripheral direction of the lateral wall portion (13); and
the fryer basket (2) comprises a plurality of limiting protrusions on an inner peripheral surface of the fryer basket (2); the number of the limiting protrusions is equal to the number of the support portions (12); the plurality of limiting protrusions are spaced apart from each other along a peripheral direction of the fryer basket (2); and each support portion (12) abuts against a top surface of the corresponding limiting protrusion.

14. The fryer basket assembly according to claim 12 or 13, wherein the fryer basket (2) comprises a plurality of fifth air holes (21) on a side wall of the fryer basket (2).

15. An air fryer, comprising the fryer plate (1) according to any one of claims 1-11 or the fryer basket assembly according to any one of claims 12-14.
